# EUROPÄISCHE PATENTSCHRIFT

(11) **EP 4 619 723 B1**
(45) Veröffentlichungstag und Bekanntmachung des Hinweises auf die Patenterteilung: **17.06.2026**
(21) Anmeldenummer: 23820784.9
(22) Anmeldetag: 30.11.2023
(51) Int. Cl.: G01M 17/10, G01M 13/045, B23B 5/32, G01M 17/08

(54) **SYSTEM ZUR DIAGNOSE VON RADSATZLAGERN**
SYSTEM FOR DIAGNOSING WHEEL SET BEARINGS
SYSTÈME DE DIAGNOSTIC DE PALIERS DE TRAIN DE ROUES

(30) Priorität: 12.01.2023 DE 102023200213
(43) Veröffentlichungstag der Anmeldung: 24.09.2025
(73) Patentinhaber: Siemens Mobility GmbH, 80997 München (DE)
(72) Erfinder: MARINO, Enrico Pasquale, 91058 Erlangen (DE)
(74) Vertreter: Siemens Patent Attorneys
(86) Internationale Anmeldenummer: PCT/EP2023/083646
(87) Internationale Veröffentlichungsnummer: WO 2024/149513

(56) Entgegenhaltungen:
- CN-A- 106 596 103
- DE-A1- 19 826 422
- DE-B2- 2 608 940
- DE-U1- 202005 005 278

## Beschreibung

Die Erfindung betrifft die Ermittlung des Verschleißes eines Radsatzlagers eines Schienenfahrzeugs.

Bei Schienenfahrzeugen spielt - insbesondere im Bereich der Personenbeförderung - die Sicherheit eine große Rolle. Es existieren bei einem Schienenfahrzeug viele Komponenten, welche im Betrieb hohen Belastungen ausgesetzt sind, und deren Beschädigung zu einem Ausfall oder Unfall des Fahrzeugs führen können. Dementsprechend müssen diese Komponenten zuverlässig gewartet und gegebenenfalls instandgesetzt werden. Besondere Bedeutung kommt hierbei den Radsatzlagern zu, welche die sich drehenden Wellen der Radsätze mit nicht rotierenden Teilen des Schienenfahrzeugs verbinden. Diese erfahren mit der Zeit Verschleiß, was bei zu starkem Verschleiß ein Sicherheitsrisiko für den Betrieb des Schienenfahrzeugs darstellt. CN 106 596 103 offenbart eine Lagerdetektionsvorrichtung für eine Unterflur-Drehmaschine.

Der Erfindung liegt die Aufgabe zugrunde, ein Verfahren zur Ermittlung des Verschleißes eines Radsatzlagers eines Schienenfahrzeugs aufzuzeigen.

Diese Aufgabe wird durch ein Verfahren mit den Merkmalen des Anspruchs 1 gelöst. Ferner sind Gegenstand der Erfindung ein entsprechendes System zum Ermitteln des Verschleißes eines Radsatzlagers eines Schienenfahrzeugs, eine Vorrichtung zur Datenverarbeitung, ein entsprechendes Computerprogramm, ein entsprechendes computerlesbares, vorzugsweise nichtflüchtiges, Speichermedium, und ein entsprechendes Übertragungssignal. Vorteilhafte Ausgestaltungen und Weiterbildungen sind Gegenstand von Unteransprüchen.

Bei dem erfindungsgemäßen Verfahren werden Messdaten einer akustischen und gegebenenfalls thermischen Messung am Radsatzlager erfasst, während sich die Räder des Radsatzes in einer Radsatzdrehmaschine drehen. Die erfassten Messdaten werden mit anderen Messdaten einer thermischen und gegebenenfalls akustischen Messung verglichen, und basierend auf dem Vergleich wird auf einen Verschleißzustand des Radsatzlagers geschlossen.

Die Messungen erfolgen nicht im regulären Betrieb des Schienenfahrzeugs, bei welchem die Räder auf der Schiene rollen und das Fahrzeug sich somit fortbewegt. Vielmehr drehen sich die Räder in einer Radsatzdrehmaschine. Hier kann die Welle mit den Rädern bewegt werden, um z.B. Reparatur- und Instandsetzungsmaßnahmen am Radsatz und verbundenen Komponenten durchführen zu können, ohne dass diese demontiert werden müssen. Dies stellt ein geschütztes Umfeld dar, in welchem die Messungen zum Ermitteln des Verschleißes des Radsatzlagers durchgeführt werden können, ohne durch Geräusche, Bewegungen oder andere Einflüsse, welche mit einem fahrenden Schienenfahrzeug einhergehen, gestört zu werden.

Die Messdaten können hierbei mittels einer thermische Messung, und gegebenenfalls einer akustischen Messung erfasst werden. Werden beide Arten von Messungen durchgeführt, so können diese gleichzeitig oder nacheinander erfolgen. Die Erfassung der Messdaten dient dem Zweck, diese mit anderen Messdaten vergleichen zu können, wobei akustische Messdaten mit anderen akustischen Messdaten zu vergleichen sind, sowie thermische Messdaten mit anderen thermischen Messdaten.

Der Vergleich der erfassten Messdaten mit anderen Messdaten erlaubt es, Aussagen über den Verschleiß des Lagers zu treffen. Denn zunehmender Verschleiß eines Radsatzlagers äußert sich insbesondere durch Veränderung der Schallemission und vermehrte Erhitzung. Der Verschleißzustand, auf welchen basierend auf dem Messdatenvergleich geschlossen wird, muss nicht als Wert o.ä. angebbar sein. Vielmehr ist es ausreichend, wenn diesem Verschleißzustand entnehmbar ist, ob und gegebenenfalls welche Maßnahmen am Lager durchzuführen sind. Beispiele für solche Verschleißzustände sind: normaler Verschleiß / anomaler großer Verschleiß, Verschleißzustand liegt unter kritischem Grenzwert / Verschleißzustand übersteigt kritischen Grenzwert.

Die anderen Messdaten können aus einer oder mehreren früher durchgeführten Messungen des Radsatzlagers stammen. Der Vergleich zeigt also direkt an, inwiefern sich die Messdaten gegenüber früher verändert haben. Hierzu können die früher durchgeführten Messungen eine Messung an dem Radsatzlager im Neuzustand umfassen, und/oder eine Messung an dem Radsatzlager nach dessen Benutzung beim Betrieb des Schienenfahrzeugs. Z.B. kann eine Messung des neuen Lagers, sowie eine Messung nach einjährigem Einsatz des Lagers im Schienenfahrzeug mit der aktuellen Messung verglichen werden. Hierdurch kann eine Entwicklung erkennbar sein, welche als normal oder anomal eingestuft werden kann, wobei bei der anomalen Entwicklung Maßnahmen zur Instandsetzung einzuleiten wären.

Die anderen Messdaten können alternativ aus einer oder mehreren aktuellen Messungen eines oder mehrerer anderer Radsatzlager des gleichen Schienenfahrzeugs stammen. In diesem Fall wird das betrachtete Lager mit anderen Lagern verglichen. Da die Radsatzlager eines Schienenfahrzeugs üblicherweise gleich alt sind und die gleiche Nutzung erfahren haben, sollten sie ähnliche Messergebnisse liefern. Wenn ein Lager stark von den anderen abweicht, deutet dies auf übermäßigen Verschleiß hin.

Zur Auswertung der Messdaten von akustischen Messungen kann ein Pegel bestimmt werden und/oder eine Spektralanalyse erfolgen. Hierzu bieten sich insbesondere Messungen im Ultraschallbereich an. Der Pegel bezieht sich auf die Lautstärke bei einer bestimmten Frequenz oder gemittelten über einen bestimmten Frequenzbereich. Dies ist die leichtere Auswertung, da nur eine einzelne Größe als Ergebnis vorliegt, liefert dafür jedoch auch nur gröbere Erkenntnisse. Mit einer Spektralanalyse können mehrere Oberschwingungen betrachtet werden, was aufwendiger ist, jedoch eine höhere Aussagekraft haben kann. Insbesondere ermöglicht dies, erste Hinweise auf die Ursache oder Art des Verschleißes zu erhalten.

Bei der Radsatzdrehmaschine kann es sich um eine Unterflurradsatzdrehbank handeln, in welcher die Räder reprofiliert werden. Derartige Drehbänke befinden sich üblicherweise in Hallen, so dass hier eine komfortable und sichere Durchführung der Messungen möglich ist. Es kommen jedoch auch andere Radsatzdrehmaschinen zum Einsatz bei der Erfindung in Betracht. Unabhängig von der konkreten Ausgestaltung der Radsatzdrehmaschine können die Messdaten erfasst werden, bevor oder nachdem die Räder des Radsatzes in der Radsatzdrehmaschine reprofiliert werden.

Bei dem Vergleich ist es vorteilhaft, mindestens einen Schwellenwert für den Unterschied zwischen den erfassten Messdaten und den anderen Messdaten zu verwenden, und abhängig vom Überschreiten des mindestens einen Schwellenwerts auf den Verschleißzustand zu schließen. Auf diese Weise ist eine einfache Unterscheidung zwischen normal und anomal möglich, oder auch bei Verwendung mehrerer Schwellenwert zwischen mehreren Stufen des Verschleißes. Basierend auf dem Verschleißzustand kann dann eine Maßnahme zur Instandsetzung des Radsatzlagers durchgeführt werden.

Es können zuerst Messdaten einer thermischen Messung am Radsatzlager erfasst werden, und nach dem Schließen auf einen Verschleißzustand aufgrund dieser Messungen kann dann abhängig von diesem Verschleißzustand entschieden werden, zusätzlich Messdaten einer akustischen Messung am Radsatzlager zu erfassen. Dies ermöglicht es insbesondere, eine in der Auswertung aufwendigere akustische Messung nur dann durchzuführen, wenn die thermische Messung eine Auffälligkeit zeigt.

Das System zum Ermitteln des Verschleißes eines Radsatzlagers eines Schienenfahrzeugs verfügt über ein mobiles Messkit mit einem akustischen und einem thermischen Sensor zum Erfassen von Messdaten einer akustischen und thermischen Messung am Radsatzlager, während sich die Räder des Radsatzes in einer Radsatzdrehmaschine drehen, und über eine Vorrichtung zur Datenverarbeitung zum Vergleichen der erfassten Messdaten mit anderen Messdaten einer akustischen und/oder thermischen Messung und zum Schließen basierend auf dem Vergleich auf einen Verschleißzustand des Radsatzlagers. Vorzugsweise ist das System auch zur Durchführung der weiteren oben erläuterten Schritte geeignet und ausgestaltet.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt ablaufen. Es kann beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Es kann auch zumindest teilweise in einer Cloud und/oder in einer Edge-Computing-Umgebung ausgeführt werden. Für den computergestützten Ablauf kommt eines oder mehrere miteinander zusammenwirkende Computerprogramme zum Einsatz. Werden mehrere Programme verwendet, so können diese gemeinsam auf einem Computer gespeichert und von diesem ausgeführt werden, oder auch auf verschiedenen Computern an verschiedenen Orten. Da dies funktional gleichbedeutend ist, wird vorliegend im Singular "das Computergrogramm" und "der Computer" formuliert.

Im Folgenden wird die Erfindung anhand eines Ausführungsbeispiels näher erläutert. Dabei zeigen:
Figur 1: die Vermessung eines Radsatzlagers an einer Unterflurradsatzdrehbank,
Figur 2: ein Ablaufdiagramm,
Figur 3: ein Mess- und Auswertesystem.

Zur Fortbewegung auf Schienen sind Schienenfahrzeuge mit Drehgestellen ausgestattet, durch welche Radsätze in einem gegenüber dem Wagenkasten drehbaren Rahmen gelagert werden. Pro Drehgestell sind einer oder mehrere Radsätze vorhanden, wobei jeder Radsatz eine Radsatzwelle und zwei fest mit der Radsatzwelle verbundene Räder aufweist. Die Radsatzwelle verfügt über Lagersitze für Radsatzlager. Üblicherweise sind weitere Komponenten am Drehgestell vorhanden, welche für das Verständnis der Erfindung nicht relevant sind.

Ein Radsatzlager erfüllt die Funktion, den jeweiligen Radsatz am Drehgestell oder am Rahmen eines Schienenfahrzeuges zu lagern. Üblicherweise handelt es sich bei den Radsatzlagern um Gleitlager oder Wälzlager. Radsatzlager sind sicherheitskritische Elemente, deren Verschleißzustand von außen nicht überprüft werden kann, da sie in geschlossenen Stahlgehäusen, den Buchsen, arbeiten. Von den Herstellern der Radsatzlager wird üblicherweise deren Zuverlässigkeit zugesichert, wenn ein periodisches Wartungsprogramm mit vorgegeben Intervallen eingehalten wird. Dementsprechend erfolgt üblicherweise periodisch eine aufwendige Instandhaltung der Radsatzlager. Dies erfordert den Stillstand des Fahrzeuges, gefolgt von einer Demontage der Lager, deren Wartung und Wiedermontage. Die vorgegebenen Intervalle, in denen die Instandhaltungsmaßnahmen erfolgen, richten sich üblicherweise nach den gefahrenen Kilometern und/oder den kumulierten Betriebsstunden. Eine typische Vorgehensweise ist es, die Lager alle 6 Jahre neu zu fetten und alle 8 Jahre komplett zu überholen. Die für die Wartung vorgesehenen Intervalle hängen hierbei von der Art des Schienenfahrzeugs ab, insbesondere davon, ob es sich um eine Lokomotive oder einen Waggon handelt. Diese feste Vorgabe für die Zeitpunkte der Wartung führt dazu, dass häufig Lager gewartet werden, die noch nicht einen eine Wartung erforderlich machenden Verschleißzustand erreicht haben, oder dass umgekehrt in seltenen Fällen Ausfälle der Lager manchmal früher als der geplante Wartungszeitpunk auftreten. Dies ist ein wenig effizientes Vorgehen, da der tatsächliche Zustand der Lager im Betrieb bei der Entscheidung über die Durchführung einer Wartung nicht berücksichtigt wird.

Verschleißerscheinungen der Radsatzlager können z.B. darin liegen, dass das Schmierfett sich alterungsbedingt hinsichtlich seiner Schmiereigenschaften verschlechtert, was Schäden am Metall des Lagers hervorrufen kann, oder dass Risse im Metall des Lagers entstehen oder dass metallische Bestandteile ihre Form verändern. Die Radsatzlager sind so konstruiert, dass Verschleißerscheinungen üblicherweise zwei messbare Auswirkungen haben: sie führen einerseits zu veränderten Schallemissionen und andererseits zu einer Neigung zur Überhitzung der rotierenden Teile und der umgebenden Buchse.

Daher wird vorgeschlagen, Temperatur- und gegebenenfalls Schallmessungen am Radsatzlager durchzuführen, um den Fortschritt des Verschleißes zu ermitteln.

Die Messung von Temperatur und gegebenenfalls Schall muss erfolgen, wenn das Lager arbeitet, d.h. die Räder des Schienenfahrzeugs sich drehen. Zu diesem Zweck wäre es möglich, eine dauerhafte Anbringung von Sensoren am Drehgestell vorzusehen. Hierzu müssten jedoch Vorkehrungen getroffen werden, dass diese nicht zu stark schwingen und während der Fahrt beschädigt werden. Außerdem müssen grundsätzlich die Komponenten am Drehgestell zugelassen werden. Die Verwendung von Sensoren, die fest am Fahrzeug installiert sind, hat somit zahlreiche Nachteile. Daher werden die Messungen Temperatur und gegebenenfalls Schall nicht während der Fahrt des Schienenfahrzeugs durchgeführt, sondern zu Gelegenheiten außerhalb des regulären Betriebs des Schienenfahrzeugs.

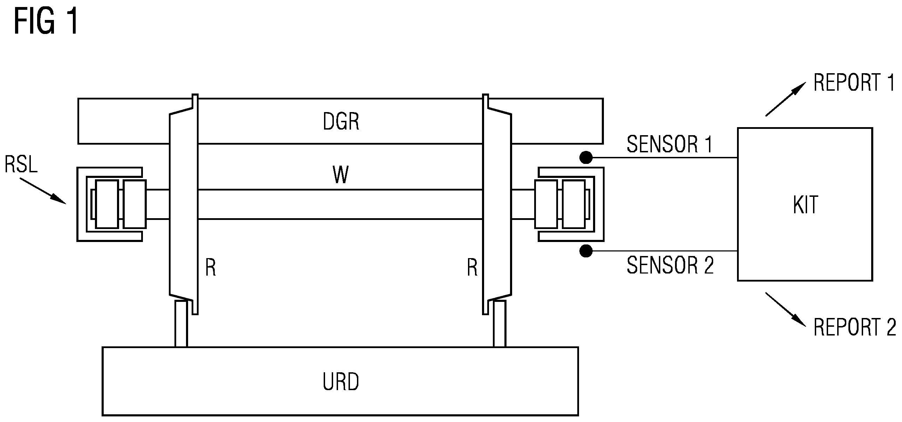

Außer den Radsatzlagern bedürfen auch die Räder eines Schienenfahrzeugs einer regelmäßigen Überholung. Das Profil der Räder umfasst einen Spurkranz und die daran anschließende Lauffläche, welche eine auf das Verhalten in Kurven und im geraden Gleis abgestimmte Form aufweist. Diese Lauffläche des Rades nutzt sich beim Fahren auf der Schiene ab, wodurch sich die Laufeigenschaften des Rades verschlechtern. Daher müssen die Räder reprofiliert werden, d.h. die Laufflächen werden wieder aufgearbeitet und hiermit wird das ursprüngliche Profil auf der Lauffläche des Rades wiederhergestellt. Diese Reprofilierung der Räder erfolgt üblicherweise deutlich häufiger als die Wartung der Radsatzlager: beispielsweise kann dies für eine Lokomotive größerer Leistung ca. alle 100.000 bis 200.000 Kilometer vorgesehen sein, was bei einer durchschnittlichen jährlichen Laufleistung solcher Fahrzeuge bedeutet, dass die Räder ca. einmal pro Jahr reprofiliert werden. Hierzu werden die Räder im eingebauten Zustand auf speziellen Drehmaschinen gedreht. Zu diesem Zweck kommen üblicherweise Unterflur-Radsatzdrehbänke zum Einsatz, auf welche das Schienenfahrzeug für die Reprofilierung gefahren wird. Figur 1 zeigt die Vermessung eines Radsatzlagers in einer Unterflurradsatzdrehbank. Hierbei handelt es sich nur um einen Ausschnitt des Schienenfahrzeugs, nicht gezeigt sind andere für die folgende Erläuterung nicht relevante Komponenten des Schienenfahrzeugs. Schematisch dargestellt sind der Drehgestellrahmen DGR, die Welle W, die beiden Radsatzlager RSL, sowie die beiden Räder R. Das Schienenfahrzeug befindet sich zur Reprofilierung der Räder R auf einer Unterflurradsatzdrehbank URD, auch als Unterflurradsatzdrehmaschine bezeichnet. Anstelle der stationären Unterflurradsatzdrehbank URD kann auch eine mobile Radsatzbearbeitungsmaschine zum Einsatz kommen. Wesentlich ist, dass die Räder des Schienenfahrzeugs außerhalb des regulären Betriebs gedreht werden, so dass die im Folgenden erläuterten Messungen stattfinden können.

Die Messung von Temperatur und gegebenenfalls Schall wird mittels eines tragbaren Messkits KIT durchgeführt. Dieses verfügt über einen Akustiksensor SENSOR 1 und einen Thermosensor SENSOR 2. Je nach konkreter Ausgestaltung dieser Messgeräte werden sie in geeignete Position gebracht, z.B. in die unmittelbare Nähe des Radsatzlagers RSL gehalten oder an diesem befestigt, z.B. angeklebt oder magnetisch fixiert. Es kann - wie in der Figur dargestellt - zuerst eines der beiden Radsatzlager RSL vermessen werden, oder alternativ auch beide gleichzeitig, indem zwei Messkits KIT zum Einsatz kommen, oder ein Messkit KIT über einen doppelten Satz an Messgeräten verfügt. Die Messergebnisse REPORT 1 und REPORT 2 von Akustiksensor SENSOR 1 und Thermosensor SENSOR 2 werden über Funk oder Kabel an einen Computer zur weiteren Auswertung übertragen.

Anstelle eines Messkits, mit dem die Sensoren transportiert werden können, ist es auch möglich, diese befestig an der Unterflurradsatzdrehbank URD vorzusehen. Hier befindet sich üblicherweise ohnehin Sensorik für Messungen an den Rädern, diese kann um die Sensorik SENSOR 1 und SENSOR 2 für die Lager ergänzt werden.

Zur akustischen Messung:
Schallemissionsänderungen aufgrund von Verschleiß sind insbesondere im Ultraschallbereich zu erwarten. Zusätzlich oder alternativ können Messungen auch im vom menschlichen Ohr detektierbaren Schall-Frequenzbereich erfolgen.

Als Schallemissionsänderung kann zum einen eine Pegeländerung, insbesondere als Mittelwert über einen bestimmten Frequenzbereich, als Anzeichen von Verschleiß angesehen werden. So kann ein Anstieg des Ultraschalllevels um x dB gegenüber dem Zustand eines "gesunden" Lagers als Maß des Verschleißes herangezogen werden. Z.B. kann ein Anstieg um 5 dB das erste Verschleißanzeichen sein, während ein Anstieg um 50 dB ein nicht mehr funktionstüchtiges Lager anzeigt.

Zum anderen kann zusätzlich oder alternativ zur Pegeländerung auch eine Spektralanalyse erfolgen. Hierzu wird eine Fast Fourier Transformation (FFT) der Schallmessungsergebnisse berechnet. Während "gesunde", also wenig Verschleiß aufweisende, Lager ein recht gleichmäßig verteiltes Ultraschallgeräusch von sich geben, d.h. in der Spektralansicht sind keine oder nur sehr wenige Oberschwingungen erkennbar, geht zunehmender Verschleiß mit dem Einsetzen und Zunehmen von Oberschwingungen einher.

Als Sensorik für die Schallmessung steht eine Vielzahl geeigneter Ultraschallgeräte mit Tonaufzeichnung zur Verfügung, für die Auswertung hinsichtlich Pegeländerung und Spektralanalyse existiert Schallanalyse-Software.

Die Beurteilung des Verschleißzustands eines Lagers erfolgt durch Vergleich mit Referenzmessungen. Hierzu wird zunächst eine Messung am neuen Lager durchgeführt, nachdem dies am Radsatz montiert wurde und bevor es für den regulären Betrieb eingesetzt wird. Die erste Referenzmessung findet also vor der Neuinbetriebnahme des Lagers statt. Alternativ kann es sich hierbei auch um eine Wiederinbetriebnahme handeln, nachdem das Lager überholt wurde. Bei einer Überholung werden die Lager aus ihren Buchsen ausgebaut, zerlegt, hinsichtlich Schäden/Rissen/Verschleiß untersucht und je nach Ergebnis entweder neu befettet und wieder eingebaut oder verschrottet und durch ein neues Lager ersetzt. Zum Zeitpunkt der nächsten Reprofilierung der Räder, z.B. nach etwa einem Jahr der Benutzung des Lagers, erfolgt die nächste Messung. Bei der darauffolgenden nächsten Reprofilierung der Räder erfolgt wieder die nächste Messung, usw. Zur Auswertung kann jeweils die aktuelle Messung mit einer oder mehreren der vorherigen Messungen verglichen werden; hierzu kann als Referenzmessung z.B. die jeweils letzte Messung herangezogen werden, oder die erste Messung des neuen Lagers, oder auch mehrere dieser Messungen.

Beim Vergleich mit Referenzmessungen ist es nicht nötig, dass ein Lager mit sich selbst verglichen wird, d.h. die aktuellen Messungen mit früheren Messungen am gleichen Lager. Vielmehr ist es auch möglich, dass sich die älteren Referenzmessungen auf ein anderes Lager des gleichen Typs beziehen. Ferner muss der Vergleich auch nicht mit früheren Messungen erfolgen, sondern es können auch die aktuellen Ergebnisse verschiedener Lager des gleichen Schienenfahrzeugs stattfinden. Üblicherweise verfügt ein Schienenfahrzeug über 8 Radsatzlager, welche i.d.R. das gleiche Alter haben, so dass sie untereinander hinsichtlich des Verschleißes gut vergleichbar sind.

Es können Schwellenwerte festgelegt werden, ab welchen eine Instandsetzung oder gar ein vollständiger Austausch eines Lagers stattfinden soll. Diese Schwellenwerte kann man erhalten, indem ein Lager mehrfach vermessen wird, wobei bei jeder Messung der Verschleißzustand bekannt ist. Hierdurch liegt eine Reihe von Ergebnissen der akustischen Messung mit zunehmendem Verschleiß vor, also eine Korrelation zwischen Verschleiß und Messergebnissen. Es ist also bekannt, wie "gesunde" und "kranke" Schallemissionen eines Lagers klingen. Basierend hierauf können geeignete Schwellenwerte festgelegt werden. Diese Schwellenwerte können dann genutzt werden, geeignete Maßnahmen bzgl. Erhalt, Instandsetzung, Reparatur und Austausch von sich im Betrieb befindlichen Lagern auszulösen. Beispielsweise könnte eine derartige Regel lauten, dass ab einer Schallpegelsteigerung von 10 dB gegenüber der letzten Messung oder von 20 dB gegenüber der Messung am neuen Lager das vermessene Lager zu demontieren und zu warten ist. Insbesondere anormale Verschleißzustände können leicht detektiert werden, da sie in deutlichen Änderungen gegenüber der letzten Messung oder Abweichungen gegenüber den Lagern des gleichen Fahrzeugs resultieren. Diese sind besonders sicherheitskritisch, so dass bei derartigen Hinweisen auf Verschleiß, welcher das übliche Maß deutlich übersteigt, unverzüglich Korrekturmaßnahmen eingeleitet werden können.

Die Bewertung des Lagerverschleißes anhand von Referenzmessungen bewirkt, dass eine Demontage des Lagers nur dann erfolgt, wenn dies aufgrund des festgestellten Verschleißes tatsächlich nötig ist. D.h. die Analyse der Schallemissionen und der Vergleich der Ergebnisse mit Referenzproben oder mit anderen Lagern desselben Fahrzeugs bietet wichtige Anhaltspunkte für die Feststellung eines verschlechterten Zustands, der sonst nur durch eine Demontage und Auseinanderbau des Lagers festgestellt werden könnte.

### Thermische Messungen:

Ebenso bietet die Überwachung der Überhitzung während der Rotation im Vergleich zu Referenzproben zusätzliche Information zur Feststellung eines Verschlechterungszustands eines Lagers. Zunehmender Verschleiß kann sich durch erhöhte innere Reibung zeigen, was in einer starken Temperaturerhöhung resultiert und anhand von thermischen Messungen festgestellt werden kann.

Obige Erläuterungen zu den akustischen Messungen gelten entsprechend auch für die Temperaturmessungen.

Beide Methoden - thermische und akustische Messungen - können einzeln und unabhängig voneinander eingesetzt werden. Von Vorteil ist es jedoch, die beiden zu kombinieren. Für die kombinierte Anwendung eignet es sich besonders, die thermische Messung zuerst durchzuführen. Denn diese ist hinsichtlich der Auswertung deutlich einfacher: es liegt lediglich ein einzelner Messwert, nämlich die am Lager gemessene Temperatur, vor. Dieser kann wie oben beschriebenen mit geeigneten Referenzmessungen verglichen werden. D.h. die thermische Messung liefert schnell und ohne weitergehende Analyse eine Aussage über den Verschleißzustand des Lagers. Ist gemäß dieser Aussage von einem normalen Verschleiß auszugehen, was keine Maßnahmen am Lager erforderlich macht, kann die akustische Messung unterbleiben. Alternativ kann die akustische Messung zur Überprüfung der Schlussfolgerung, welche aus der Temperaturmessung gezogen wurde, durchgeführt werden. Jedenfalls sollte die akustische Messung dann stattfinden, wenn die thermische Messung eine Auffälligkeit gezeigt hat.

Die akustischen und thermischen Messungen finden während der Rotation statt, also während das oder die zu vermessenden Lager arbeiten, d.h. die Welle sich dreht. Hierzu besteht vor oder nach den Dreharbeiten, bei welchen die Reprofilierung der Räder erfolgt, in der Unterflurradsatzdrehbank die Möglichkeit, die Achsen so lange auf der Drehbank rotieren zu lassen, wie es für die Durchführung der akustischen und/oder thermischen Messungen erforderlich ist.

Die Messgeräte können wie in der Figur dargestellt in tragbare Messkits organisiert werden. Dies bedeutet eine große Flexibilität, denn die Sensorik kann einfach von Lager zu Lager getragen werden, um somit alle Radsatzlager des sich auf der Unterflurradsatzdrehbank befindlichen Schienenfahrzeugs zu vermessen. Die Messergebnisse können von portablen Auswerteeinreichtungen, welche Bestandteil des Messkits sein können, vorausgewertet oder vollständig ausgewertet werden. Vorzugsweise erfolgt eine Übertragung der - gegebenenfalls bereits teilweise ausgewerteten - Messergebnisse an einen Computer, welcher eine Analyse der Messergebnisse vornimmt und auch eine Speicherung derselben in einer Datenbank veranlasst.

Die beschriebene Vorgehensweise weist den Vorteil auf, dass der nahezu optimale Zeitpunkt für die Durchführung einer Lagerwartung ermittelt wird. Denn wie bereits erläutert findet eine Reprofilierung der Räder in nicht allzu großen Zeitabständen statt, so dass eine im Vergleich zu den üblichen Intervallen für die Lagerwartung kurze Taktung der Betrachtung des Verschleißzustands der Lager Anwendung findet. Dies führt dazu, dass abweichend von der derzeit gängigen Herangehensweise kein festes Intervall für die Wartung der Lager vorgesehen sein muss, sondern die Wartung bedarfsangepasst stattfinden kann. Dies resultiert schließlich auch darin, dass gegenüber der heutigen Herangehensweise die Sicherheit erhöht wird, da die Lager häufiger überwacht werden können, nämlich bei jeder Reprofilierung, so dass bei Erreichen von Schwellwerten rechtzeitig eine korrigierende Wartung durchgeführt werden kann.

Von Vorteil bei der beschriebenen Vorgehensweise ist ferner insbesondere, dass keine aufwendige und gegenüber Umwelteinflüssen unempfindliche Sensorik nötig ist. Denn es ist nicht das Fahrzeug, das mit akustischen und thermischen Sensoren ausgestattet ist. Diese könnten bei ungünstigen Arbeitsbedingungen zu Fehlalarmen führen. Auch in die Schienen integrierte, in der Nähe der Schienen angeordnete oder schienennah mitfahrende Sensorik wird nicht benötigt.

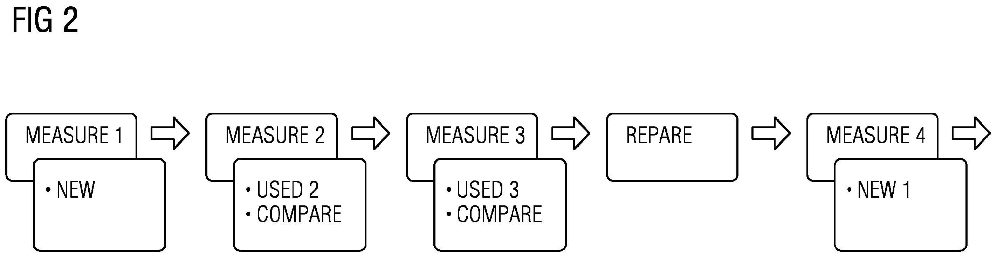

Zusammenfassend zeigt Figur 2 ein beispielhaftes Ablaufdiagramm zu dem geschilderten Vorgehen. Im ersten Schritt MEASURE 1 erfolgt eine akustische und thermische Messung an dem neuen Lager NEW. Zum Zeitpunkt der ersten Reprofilierung der Räder nach Beginn des Gebrauchs des neuen Lagers NEW findet als zweiter Schritt MEASURE 2 eine akustische und thermische Messung an dem benutzten Lager USED 2 statt. Das Ergebnis dieser Messungen wird im Schritt COMPARE mit der Referenzmessung aus dem Schritt MEASURE 1 verglichen. Als Resultat dieses Vergleichs wird festgestellt, dass keine Maßnahmen zur Wartung des Lagers erforderlich sind. Zum Zeitpunkt der nächsten Reprofilierung der Räder erfolgt als dritter Schritt MEASURE 3 eine akustische und thermische Messung an dem weiter benutzten Lager USED 3. Das Ergebnis dieser Messungen wird im Schritt COMPARE mit der Referenzmessung aus dem Schritt MEASURE 1 und/oder aus dem Schritt MEASURE 2 verglichen. Aus diesem Vergleich ergibt sich, dass das Lager einen anomal großen Verschleiß aufweist, so dass im folgenden Schritt REPARE eine Wartung des Lagers erfolgt. Vor dem Wiedereinbau oder zumindest vor der weiteren Benutzung des Lagers wird im Schritt MEASURE 4 eine akustische und thermische Messung an dem gewarteten Lager NEW 1 durchgeführt. Dieses Messergebnis kann wieder als Referenzergebnis bei folgenden, in der Figur nicht dargestellten, Vergleichsschritten COMPARE genutzt werden.

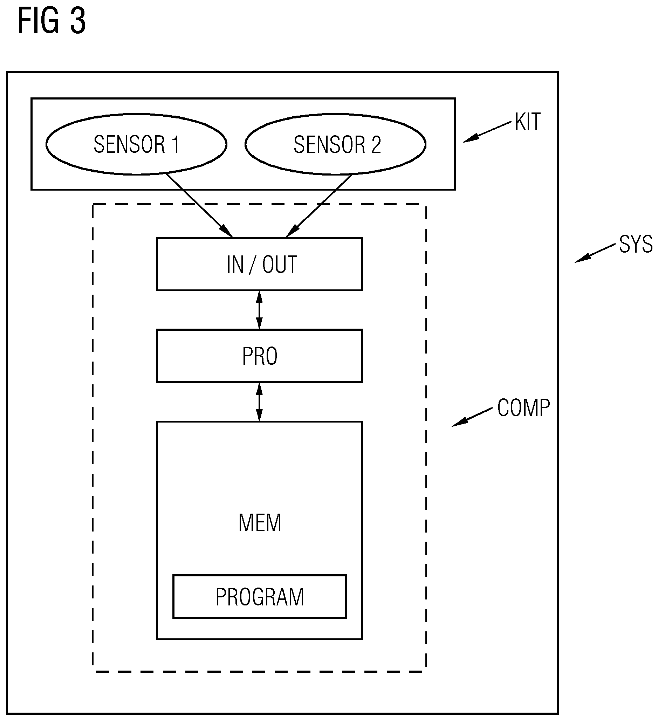

Figur 3 zeigt ein für die beschriebene Vorgehensweise einsetzbares Mess- und Auswertesystem SYS. Das System SYS kann sich insbesondere in einer Halle befinden, in welche Schienenfahrzeuge zur Reprofilierung gebracht werden. Während die im Folgenden näher erläuterten Bestandteile in der Figur einfach vorhanden sind, ist es auch möglich, dass diese in mehrfacher Ausführung vorhanden sind, z.B. als verteiltes System. Auf diese Weise kann die Funktionalität des Mess- und Auswertesystems SYS auf mehrere, gegebenenfalls hierarchisch miteinander verknüpfte, Systeme aufgeteilt werden.

Das System SYS verfügt über den Akustiksensor SENSOR 1 und den Thermosensor SENSOR 2, welche gemeinsam das Messkit KIT bilden. Deren Messdaten werden über eine Ein- und Ausgabeeinheit IN/OUT an die Auswerteeinheit COMP geliefert. Die Datenübertragung zwischen den Sensoren und der Auswerteeinheit COMP erfolgt vorzugsweise drahtlos, wobei für diese Kommunikation geeignete Protokolle zum Einsatz kommen können, wie z.B. GSM, SMS, MMS, CDMA, TDMA, PDC, WCDMA, CDMA2000, GPRS, EDGE, UMTS, LTE, sowie Kommunikationsprotokolle der 5ten oder höherer Generationen, oder auch über Nahfeldkommunikation wie z.B. Bluetooth, WiFi o.ä.

Die Auswerteeinheit COMP umfasst eine Recheneinheit bzw. einen Prozessor PRO. Dieser ist verbunden mit einem Speicher MEM, in welchem ein Computerprogramm PROGRAM abgelegt ist. Bei dem Speicher MEM handelt es sich vorzugsweise um ein nicht-flüchtiges computerlesbares Datenspeichermedium. Die Speicherung kann auf jegliche Weise erfolgen, welche geeignet ist, die Auslesbarkeit durch eine Recheneinheit zu gewährleisten, wie durch magnetische Speicherung, z.B. mittels Diskette, optische Speicherung, z.B. mittels CD, magnetooptische Speicherung, ROM (Read Only Memory) Speicherung, RAM (Random Access Memory) Speicherung, EPROM (Erasable Programmable Read-Only Memory), EEPROM (Electrically Erasable Programmable Read-Only Memory), Flash-Memory.

Durch Ausführen der Instruktionen des Programms PROGRAM in dem Prozessor PRO werden die Schritte der oben erläuterten Vorgehensweise durchgeführt. Der Prozessor PRO ist mit der Ein- und Ausgabeeinheit IN/OUT verbunden, über welche Informationen zwischen der Auswerteeinheit COMP und anderen Komponenten und/oder einem Nutzer ausgetauscht werden können. Diese Schnittstelle kann hierbei auf geeignete Weise ausgestaltet sein, z.B. über Funk oder über Kabel, und die Kommunikation kann über geeignete Standards erfolgen. Über die Ein- und Ausgabeeinheit IN/OUT werden einerseits Messdaten an die Auswerteeinheit COMP übergeben, und andererseits kann die Auswerteeinheit COMP von ihr ermittelte Ergebnisse, insbesondere Aussagen über den Verschleißzustand und gegebenenfalls Vorschläge über vorzunehmende Maßnahmen, ausgeben. Derartige Ergebnisse der Verarbeitung im Prozessor PRO können mittels einer GUI auf einer an die Ein- und Ausgabeeinheit IN/OUT angeschlossene Anzeige wie einem Bildschirm ausgegeben werden.

Bei der Auswerteeinheit COMP kann es sich um einen generischen Computer oder einen mobilen generischen Computer handeln. Ein generischer Computer umfasst verschiedene Arten digitaler Computergeräte, so wie z.B. Desktopcomputer, Workstations, Server, Blade Server, Mainframes, oder andere geeignete Geräte. Ein mobiler generischer Computer steht entsprechend für verschiedene Arten mobiler digitaler Computergeräte, so wie z.B. Laptops, PDAs, Mobiltelefone oder Smart Phones, oder andere geeignete Geräte.

Die Erfindung wurde voranstehend an einem Ausführungsbeispiel beschrieben. Es versteht sich, dass zahlreiche Änderungen und Modifikationen möglich sind, ohne dass der Rahmen der Erfindung verlassen wird.

## Patentansprüche

1. Verfahren zum Ermitteln des Verschleißes eines Radsatzlagers (RSL) eines Schienenfahrzeugs, bei dem Messdaten einer thermischen und gegebenenfalls einer akustischen Messung am Radsatzlager (RSL) mit einem mobilen Messkit (KIT) erfasst werden, während sich die Räder des Radsatzes in einer Radsatzdrehmaschine (URD) drehen,
die erfassten Messdaten mit anderen Messdaten einer thermischen und gegebenenfalls einer akustischen Messung verglichen werden, und
basierend auf dem Vergleich auf einen Verschleißzustand des Radsatzlagers (RSL) geschlossen wird,
**dadurch gekennzeichnet, dass**
zuerst Messdaten der thermischen Messung am Radsatzlager (RSL) erfasst werden,
abhängig von dem geschlossenen Verschleißzustand entschieden wird, zusätzlich Messdaten der akustischen Messung am Radsatzlager (RSL) zu erfassen.

2. Verfahren nach Anspruch 1, bei dem
die anderen Messdaten aus einer oder mehreren früher durchgeführten Messungen des Radsatzlagers (RSL) stammen.

3. Verfahren nach Anspruch 2, bei dem
die früher durchgeführten Messungen umfassen:
eine Messung an dem Radsatzlager (RSL) im Neuzustand, und/oder
eine Messung an dem Radsatzlager (RSL) nach dessen Benutzung beim Betrieb des Schienenfahrzeugs.

4. Verfahren nach Anspruch 1, bei dem
die anderen Messdaten aus einer oder mehreren aktuellen Messungen eines oder mehrerer anderer Radsatzlager (RSL) des gleichen Schienenfahrzeugs stammen.

5. Verfahren nach einem der Ansprüche 1 bis 4, bei dem zur Auswertung der Messdaten von akustischen Messungen, insbesondere im Ultraschallbereich, ein Pegel bestimmt wird und/oder eine Spektralanalyse erfolgt.

6. Verfahren nach einem der Ansprüche 1 bis 5, bei dem es sich bei der Radsatzdrehmaschine (URD) um eine Unterflurradsatzdrehbank handelt, in welcher die Räder reprofiliert werden.

7. Verfahren nach einem der Ansprüche 1 bis 6, bei dem die Messdaten erfasst werden, bevor oder nachdem die Räder des Radsatzes in der Radsatzdrehmaschine (URD) reprofiliert werden.

8. Verfahren nach einem der Ansprüche 1 bis 7, bei dem bei dem Vergleich mindestens ein Schwellenwert für den Unterschied zwischen den erfassten Messdaten und den anderen Messdaten verwendet wird, und abhängig vom Überschreiten des mindestens einen Schwellenwerts auf den Verschleißzustand geschlossen wird.

9. Verfahren nach einem der Ansprüche 1 bis 8, bei dem basierend auf dem Verschleißzustand eine Maßnahme zur Instandsetzung des Radsatzlagers (RSL) durchgeführt wird.

10. System (SYS) zum Ermitteln des Verschleißes eines Radsatzlagers (RSL) eines Schienenfahrzeugs, mit einem mobilen Messkit (KIT) mit einem akustischen und einem thermischen Sensor (SENSOR 1, SENSOR 2) zum Erfassen von Messdaten einer thermischen und gegebenenfalls einer akustischen Messung am Radsatzlager (RSL), während sich die Räder des Radsatzes in einer Radsatzdrehmaschine (URD) drehen, und
einer Vorrichtung zur Datenverarbeitung (COMP) zum Vergleichen der erfassten Messdaten mit anderen Messdaten einer thermischen und gegebenenfalls einer akustischen Messung und zum Schließen basierend auf dem Vergleich auf einen Verschleißzustand des Radsatzlagers (RSL),
**dadurch gekennzeichnet, dass**
zuerst Messdaten der thermischen Messung am Radsatzlager (RSL) erfasst werden,
abhängig von dem geschlossenen Verschleißzustand entschieden wird, zusätzlich Messdaten der akustischen Messung am Radsatzlager (RSL) zu erfassen.

11. Computerprogramm (PROGRAM), umfassend Befehle, die bewirken, dass die Vorrichtung des Anspruchs 10 die Schritte des Verfahrens nach einem der Ansprüche 1 bis 9 ausführt.

12. Computerlesbares Speichermedium (MEM) mit einem Computerprogramm (PROGRAM) nach Anspruch 11.

13. Übertragungssignal, das das Computerprogramm (PROGRAM) nach Anspruch 11 überträgt.

## Claims

1. Method for ascertaining the wear of a wheel set bearing (RSL) of a rail vehicle, in which
measurement data of a thermal and possibly an acoustic measurement on the wheel set bearing (RSL) are captured with a mobile measuring kit (KIT) while the wheels of the wheel set rotate in a wheel set lathe (URD),
the captured measurement data are compared with other measurement data of a thermal and possibly an acoustic measurement, and
a wear state of the wheel set bearing (RSL) is concluded based on the comparison,
**characterized in that**
first measurement data of the thermal measurement on the wheel set bearing (RSL) are captured,
depending on the wear state concluded, it is decided to additionally capture measurement data of the acoustic measurement on the wheel set bearing (RSL).

2. Method according to Claim 1, in which the other measurement data originate from one or more measurements of the wheel set bearing (RSL) that were performed earlier.

3. Method according to Claim 2, in which the measurements performed earlier comprise:
a measurement on the wheel set bearing (RSL) in the new state, and/or
a measurement on the wheel set bearing (RSL) after its use during operation of the rail vehicle.

4. Method according to Claim 1, in which the other measurement data originate from one or more current measurements of one or more other wheel set bearings (RSL) of the same rail vehicle.

5. Method according to one of Claims 1 to 4, in which a level is determined and/or a spectral analysis is carried out to evaluate the measurement data of acoustic measurements, in particular in the ultrasonic range.

6. Method according to one of Claims 1 to 5, in which the wheel set lathe (URD) is an underfloor wheel set lathe, in which the wheels are reprofiled.

7. Method according to one of Claims 1 to 6, in which the measurement data are captured before or after the wheels of the wheel set are reprofiled in the wheel set lathe (URD).

8. Method according to one of Claims 1 to 7, in which at least one threshold value for the difference between the captured measurement data and the other measurement data is used in the comparison, and the wear state is concluded depending on the exceeding of the at least one threshold value.

9. Method according to one of Claims 1 to 8, in which a measure for repairing the wheel set bearing (RSL) is performed based on the wear state.

10. System (SYS) for ascertaining the wear of a wheel set bearing (RSL) of a rail vehicle, having
a mobile measuring kit (KIT) having an acoustic and a thermal sensor (SENSOR 1, SENSOR 2) for capturing measurement data of a thermal and possibly an acoustic measurement on the wheel set bearing (RSL) while the wheels of the wheel set rotate in a wheel set lathe (URD), and
a device for data processing (COMP) for comparing the captured measurement data with other measurement data of a thermal and possibly an acoustic measurement and for concluding a wear state of the wheel set bearing (RSL) based on the comparison,
**characterized in that**
first measurement data of the thermal measurement on the wheel set bearing (RSL) are captured,
depending on the wear state concluded, it is decided to additionally capture measurement data of the acoustic measurement on the wheel set bearing (RSL).

11. Computer program (PROGRAM), comprising commands which cause the device of Claim 10 to carry out the steps of the method according to one of Claims 1 to 9.

12. Computer-readable storage medium (MEM) having a computer program (PROGRAM) according to Claim 11.

13. Transmission signal, which transmits the computer program (PROGRAM) according to Claim 11.

## Revendications

1. Procédé pour l'établissement de l'usure d'un palier de train de roues (RSL) d'un véhicule ferroviaire, dans lequel des données de mesure d'une mesure thermique et éventuellement d'une mesure acoustique sont détectées au niveau du palier de train de roues (RSL) avec un kit de mesure mobile (KIT) pendant que les roues du train de roues tournent dans une machine à tourner pour train de roues (URD),
les données de mesure détectées sont comparées à d'autres données de mesure d'une mesure thermique et éventuellement d'une mesure acoustique, et
un état d'usure du palier de train de roues (RSL) est inféré sur la base de la comparaison,
**caractérisé en ce que**
des données de mesure de la mesure thermique sont d'abord détectées au niveau du palier de train de roues (RSL),
en fonction de l'état d'usure inféré, il est décidé de détecter en outre des données de mesure de la mesure acoustique au niveau du palier de train de roues (RSL).

2. Procédé selon la revendication 1, dans lequel
les autres données de mesure proviennent d'une ou de plusieurs mesures mises en œuvre auparavant du palier de train de roues (RSL).

3. Procédé selon la revendication 2, dans lequel
les mesures mises en œuvre auparavant comportent :
une mesure au niveau du palier de train de roues (RSL) à l'état neuf, et/ou
une mesure au niveau du palier de train de roues (RSL) après son utilisation lors du fonctionnement du véhicule ferroviaire.

4. Procédé selon la revendication 1, dans lequel
les autres données de mesure proviennent d'une ou de plusieurs mesures actuelles d'un ou de plusieurs autres paliers de train de roues (RSL) du même véhicule ferroviaire.

5. Procédé selon l'une des revendications 1 à 4, dans lequel pour l'évaluation des données de mesure de mesures acoustiques, en particulier dans le domaine des ultrasons, un niveau est déterminé et/ou une analyse spectrale s'effectue.

6. Procédé selon l'une des revendications 1 à 5, dans lequel la machine à tourner pour train de roues (URD) est un tour en fosse pour train de roues dans lequel les roues sont reprofilées.

7. Procédé selon l'une des revendications 1 à 6, dans lequel les données de mesure sont détectées avant ou après que les roues du train de roues ont été reprofilées dans la machine à tourner pour train de roues (URD).

8. Procédé selon l'une des revendications 1 à 7, dans lequel au moins une valeur de seuil pour la différence entre les données de mesure détectées et les autres données de mesure est utilisée lors de la comparaison, et en fonction du dépassement de l'au moins une valeur de seuil, l'état d'usure est inféré.

9. Procédé selon l'une des revendications 1 à 8, dans lequel une opération pour la remise en état du palier de train de roues (RSL) est mise en œuvre sur la base de l'état d'usure.

10. Système (SYS) pour l'établissement de l'usure d'un palier de train de roues (RSL) d'un véhicule ferroviaire, avec un kit de mesure mobile (KIT) avec un capteur acoustique et un capteur thermique (SENSOR 1, SENSOR 2) pour la détection de données de mesure d'une mesure thermique et éventuellement d'une mesure acoustique au niveau du palier de train de roues (RSL) pendant que les roues du train de roues tournent dans une machine à tourner pour train de roues (URD), et
un dispositif pour le traitement de données (COMP) pour la comparaison des données de mesure détectées à d'autres données de mesure d'une mesure thermique et éventuellement d'une mesure acoustique et pour l'inférence d'un état d'usure du palier de train de roues (RSL) sur la base de la comparaison,
**caractérisé en ce que**
des données de mesure de la mesure thermique sont d'abord détectées au niveau du palier de train de roues (RSL),
en fonction de l'état d'usure inféré, il est décidé de détecter en outre des données de mesure de la mesure acoustique au niveau du palier de train de roues (RSL).

11. Programme informatique (PROGRAM), comportant des instructions qui amènent le dispositif selon la revendication 10 à exécuter les étapes du procédé selon l'une des revendications 1 à 9.

12. Support de stockage (MEM) lisible par ordinateur avec un programme informatique (PROGRAM) selon la revendication 11.

13. Signal de transfert qui transfère le programme informatique (PROGRAM) selon la revendication 11.
